# EUROPEAN PATENT APPLICATION

(11) **EP 4 290 669 A1**
(43) Date of publication of application: **13.12.2023**
(21) Application number: 22749467.1
(22) Date of filing: 17.01.2022
(51) Int. Cl.: H01M 50/414, H01M 50/417, H01M 50/434, H01M 50/443, H01M 50/451

(54) **SLURRY COMPOSITION FOR NONAQUEOUS SECONDARY BATTERY HEAT RESISTANT LAYER, NONAQUEOUS SECONDARY BATTERY HEAT RESISTANT LAYER, SEPARATOR WITH NONAQUEOUS SECONDARY BATTERY HEAT RESISTANT LAYER, AND NONAQUEOUS SECONDARY BATTERY**

(30) Priority: 03.02.2021 JP 2021016130
(71) Applicant: Zeon Corporation, Tokyo 100-8246 (JP)
(72) Inventor: MATSUNO, Hirohiko, Tokyo 100-8246 (JP); KITAZAWA, Yuzo, Tokyo 100-8246 (JP)
(74) Representative: Maiwald GmbH
(86) International application number: PCT/JP2022/001442
(87) International publication number: WO 2022/168591

(57) **Abstract**

Provided is a slurry composition for a non-aqueous secondary battery heat-resistant layer that has excellent dispersion stability and coatability and that can form a heat-resistant layer for a non-aqueous secondary battery having excellent heat shrinkage resistance. The slurry composition contains a water-soluble polymer, non-conductive particles, and water. The water-soluble polymer includes an amide group-containing monomer unit and an acid group-containing monomer unit, with the proportional content of the amide group-containing monomer unit being 60 mass% to 98 mass% and the proportional content of the acid group-containing monomer unit being 1 mass% to 25 mass% in the water-soluble polymer. The slurry composition has a pH of 7.0 to 10.0, a viscosity of 10 mPa·s to 300 mPa·s, and a contact angle with a polyethylene substrate of 20° to 50°.

## Description

### TECHNICAL FIELD

The present disclosure relates to a slurry composition for a non-aqueous secondary battery heat-resistant layer, a heat-resistant layer for a non-aqueous secondary battery, a heat-resistant layer-equipped separator for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide range of applications. A secondary battery generally includes battery members such as electrodes (positive electrode and negative electrode) and a separator that isolates the positive electrode and the negative electrode from each other. Battery members that include a protective layer for improving heat resistance (i.e., a heat-resistant layer) are conventionally used as such battery members.

A heat-resistant layer of a secondary battery may be a layer that is formed by binding non-conductive particles using a binder. Such a heat-resistant layer is typically formed by preparing a slurry composition (hereinafter, referred to as a "slurry composition for a non-aqueous secondary battery heat-resistant layer" or simply as a "slurry composition for a heat-resistant layer") having non-conductive particles and a binder dissolved or dispersed in a dispersion medium such as water and then applying this slurry composition for a heat-resistant layer onto a substrate such as a separator substrate or an electrode substrate and drying the slurry composition for a heat-resistant layer.

In recent years, attempts have been made to improve binder compositions and slurry compositions for heat-resistant layers that are used in heat-resistant layer formation in order to achieve further improvement of secondary battery performance.

Specifically, Patent Literature (PTL) 1 discloses a binder composition for an electrochemical device functional layer that contains a water-soluble polymer including a hydroxyl group-containing monomer unit in a specific proportion and reports that a functional layer capable of improving heat resistance and rate characteristics of an electrochemical device can be formed through this binder composition for an electrochemical device functional layer.

### CITATION LIST

### Patent Literature

PTL 1: WO2019/013 102A1

### SUMMARY

### (Technical Problem)

However, there has been demand for further improvement of secondary battery performance in recent years, and there is room for improvement of the conventional binder composition described above in terms of improving dispersion stability of a slurry composition for a heat-resistant layer produced using the binder composition while also even further increasing coatability of this slurry composition for a heat-resistant layer. Moreover, it would be desirable to further improve the heat shrinkage resistance of a heat-resistant layer obtained using the conventional binder composition and slurry composition for a heat-resistant layer described above.

Accordingly, one object of the present disclosure is to provide a slurry composition for a non-aqueous secondary battery heat-resistant layer that has excellent dispersion stability and coatability and that can form a heat-resistant layer for a non-aqueous secondary battery having excellent heat shrinkage resistance.

Another object of the present disclosure is to provide a heat-resistant layer for a non-aqueous secondary battery that has excellent heat shrinkage resistance, a heat-resistant layer-equipped separator for a non-aqueous secondary battery that includes this heat-resistant layer, and a non-aqueous secondary battery that includes this heat-resistant layer-equipped separator.

### (Solution to Problem)

The inventors conducted diligent investigation with the aim of solving the problems set forth above. The inventors discovered that a slurry composition for a heat-resistant layer that contains non-conductive particles, water, and a water-soluble polymer having proportional contents of an amide group-containing monomer unit and an acid group-containing monomer unit that are within specific ranges and that has a pH, a viscosity, and a contact angle with a polyethylene substrate that are within specific ranges has excellent dispersion stability and coatability, and also discovered that by using this slurry composition for a heat-resistant layer, it is possible to form a heat-resistant layer having excellent heat shrinkage resistance. In this manner, the inventors completed the present disclosure.

Specifically, the present disclosure aims to advantageously solve the problems set forth above, and a presently disclosed slurry composition for a non-aqueous secondary battery heat-resistant layer comprises a water-soluble polymer, non-conductive particles, and water, wherein the water-soluble polymer includes an amide group-containing monomer unit and an acid group-containing monomer unit, proportional content of the amide group-containing monomer unit is not less than 60 mass% and not more than 98 mass% and proportional content of the acid group-containing monomer unit is not less than 1 mass% and not more than 25 mass% in the water-soluble polymer, the slurry composition for a non-aqueous secondary battery heat-resistant layer has a pH of not lower than 7.0 and not higher than 10.0, the slurry composition for a non-aqueous secondary battery heat-resistant layer has a viscosity of not less than 10 mPa·s and not more than 300 mPa·s, and the slurry composition for a non-aqueous secondary battery heat-resistant layer has a contact angle with a polyethylene substrate of not less than 20° and not more than 50°. A slurry composition for a heat-resistant layer that contains a water-soluble polymer having a specific chemical composition, non-conductive particles, and water and that has a pH, a viscosity, and a contact angle with a polyethylene substrate that are within specific ranges in this manner has excellent dispersion stability and coatability. Moreover, this slurry composition for a heat-resistant layer enables good formation of a heat-resistant layer having excellent heat shrinkage resistance.

Note that a "monomer unit" of a polymer referred to in the present disclosure is a "repeating unit derived from the monomer that is included in a polymer obtained using the monomer".

Also note that the "proportional content (mass%)" of each monomer unit (each repeating unit) included in a polymer referred to in the present disclosure can be measured by a nuclear magnetic resonance (NMR) method such as ¹H-NMR or ¹³C-NMR.

Moreover, the "pH" of a slurry composition for a heat-resistant layer referred to in the present disclosure can be measured by a method described in the EXAMPLES section of the present specification.

Furthermore, the "viscosity" of a slurry composition for a heat-resistant layer referred to in the present disclosure can be measured by a method described in the EXAMPLES section of the present specification.

Also, the "contact angle with a polyethylene substrate" of a slurry composition for a heat-resistant layer referred to in the present disclosure can be measured by a method described in the EXAMPLES section of the present specification.

The presently disclosed slurry composition for a non-aqueous secondary battery heat-resistant layer preferably further comprises not less than 0.1 parts by mass and not more than 1.0 parts by mass of a wetting agent per 100 parts by mass of the non-conductive particles. When the content of a wetting agent in the slurry composition for a heat-resistant layer is within the range set forth above, coatability of the slurry composition for a heat-resistant layer can be further improved, and heat shrinkage resistance of a heat-resistant layer can be even further increased. Moreover, close adherence of a heat-resistant layer and a substrate can be improved, and rate characteristics of a secondary battery can be enhanced.

In the presently disclosed slurry composition for a non-aqueous secondary battery heat-resistant layer, the water-soluble polymer preferably further includes a nitrile group-containing monomer unit. When the water-soluble polymer in the slurry composition for a heat-resistant layer further includes a nitrile group-containing monomer unit, close adherence of a heat-resistant layer and a substrate can be improved.

In the presently disclosed slurry composition for a non-aqueous secondary battery heat-resistant layer, proportional content of the nitrile group-containing monomer unit is preferably not less than 1 mass% and not more than 15 mass% in the water-soluble polymer. When the proportional content of the nitrile group-containing monomer unit in the water-soluble polymer is within the range set forth above, heat shrinkage resistance of a heat-resistant layer can be even further increased. Moreover, close adherence of a heat-resistant layer and a substrate can be improved.

In the presently disclosed slurry composition for a non-aqueous secondary battery heat-resistant layer, the water-soluble polymer preferably has a weight-average molecular weight of not less than 50,000 and not more than 1,000,000. When the weight-average molecular weight of the water-soluble polymer contained in the slurry composition for a heat-resistant layer is within the range set forth above, coatability of the slurry composition for a heat-resistant layer can be further improved, and heat shrinkage resistance of a heat-resistant layer can be even further increased.

Note that the "weight-average molecular weight" of a water-soluble polymer referred to in the present disclosure can be measured by gel permeation chromatography (GPC).

In the presently disclosed slurry composition for a non-aqueous secondary battery heat-resistant layer, content of a particulate polymer is preferably 80 mass% or less of total content of the water-soluble polymer and the particulate polymer. When the proportion constituted by a particulate polymer among the total of the water-soluble polymer and the particulate polymer is not more than the value set forth above, electrolyte solution affinity of a heat-resistant layer (i.e., electrolyte solution injectability of a battery member such as a separator that includes the heat-resistant layer) can be improved.

Moreover, the present disclosure aims to advantageously solve the problems set forth above, and a presently disclosed heat-resistant layer for a non-aqueous secondary battery is formed using any one of the slurry compositions for a non-aqueous secondary battery heat-resistant layer set forth above. A heat-resistant layer that is formed from any one of the slurry compositions for a heat-resistant layer set forth above in this manner has excellent heat shrinkage resistance and electrolyte solution affinity.

Furthermore, the present disclosure aims to advantageously solve the problems set forth above, and a presently disclosed heat-resistant layer-equipped separator for a non-aqueous secondary battery comprises the heat-resistant layer for a non-aqueous secondary battery set forth above. A heat-resistant layer-equipped separator that includes the heat-resistant layer set forth above has excellent electrolyte solution injectability.

Also, the present disclosure aims to advantageously solve the problems set forth above, and a presently disclosed non-aqueous secondary battery comprises the heat-resistant layer-equipped separator for a non-aqueous secondary battery set forth above. A non-aqueous secondary battery that includes the heat-resistant layer-equipped separator set forth above in this manner has excellent rate characteristics.

### (Advantageous Effect)

According to the present disclosure, it is possible to provide a slurry composition for a non-aqueous secondary battery heat-resistant layer that has excellent dispersion stability and coatability and that can form a heat-resistant layer for a non-aqueous secondary battery having excellent heat shrinkage resistance.

Moreover, according to the present disclosure, it is possible to provide a heat-resistant layer for a non-aqueous secondary battery that has excellent heat shrinkage resistance, a heat-resistant layer-equipped separator for a non-aqueous secondary battery that includes this heat-resistant layer, and a non-aqueous secondary battery that includes this heat-resistant layer-equipped separator.

### DETAILED DESCRIPTION

The following provides a detailed description of embodiments of the present disclosure.

The presently disclosed slurry composition for a non-aqueous secondary battery heat-resistant layer can be used in formation of a heat-resistant layer of a non-aqueous secondary battery such as a lithium ion secondary battery. Moreover, a feature of the presently disclosed heat-resistant layer for a non-aqueous secondary battery is that it is formed from the presently disclosed slurry composition for a non-aqueous secondary battery heat-resistant layer. Furthermore, a feature of the presently disclosed heat-resistant layer-equipped separator for a non-aqueous secondary battery is that it includes a heat-resistant layer for a non-aqueous secondary battery formed using the presently disclosed slurry composition for a non-aqueous secondary battery heat-resistant layer. Also, a feature of the presently disclosed non-aqueous secondary battery is that it includes the presently disclosed heat-resistant layer-equipped separator for a non-aqueous secondary battery.

### (Slurry composition for non-aqueous secondary battery heat-resistant layer)

The presently disclosed slurry composition for a heat-resistant layer contains a water-soluble polymer, non-conductive particles, and water as a dispersion medium and optionally further contains a wetting agent, a particulate polymer, and other components.

Features of the presently disclosed slurry composition for a heat-resistant layer are that the aforementioned water-soluble polymer includes an amide group-containing monomer unit and an acid group-containing monomer unit, the proportional content of the amide group-containing monomer unit is not less than 60 mass% and not more than 98 mass%, the proportional content of the acid group-containing monomer unit is not less than 1 mass% and not more than 25 mass%, the slurry composition for a heat-resistant layer has a pH of not lower than 7.0 and not higher than 10.0, the slurry composition for a heat-resistant layer has a viscosity of not less than 10 mPa·s and not more than 300 mPa·s, and the slurry composition for a heat-resistant layer has a contact angle with a polyethylene substrate of not less than 20° and not more than 50°.

As a result of the presently disclosed slurry composition for a heat-resistant layer containing non-conductive particles and a water-soluble polymer that includes an amide group-containing monomer unit and an acid group-containing monomer unit in water, the proportional contents of the amide group-containing monomer unit and the acid group-containing monomer unit being within the ranges set forth above, and the presently disclosed slurry composition for a heat-resistant layer having a pH, a viscosity, and a contact angle with a polyethylene substrate that are within the ranges set forth above, this slurry composition for a heat-resistant layer has excellent dispersion stability and coatability and can be used to form a heat-resistant layer having excellent heat shrinkage resistance. Although it is not certain why the above-described effects are achieved by using a slurry composition for a heat-resistant layer that has a pH, a viscosity, and a contact angle with a polyethylene substrate that are within specific ranges and that has the above-described water-soluble polymer and non-conductive particles dissolved or dispersed in water in this manner, the reason for this is presumed to be as follows.

Firstly, the water-soluble polymer that is contained in the slurry composition for a heat-resistant layer includes an amide group-containing monomer unit. This amide group-containing monomer unit is thought to function as a main skeleton that imparts high rigidity to the water-soluble polymer, thereby enabling improvement of heat shrinkage resistance of a heat-resistant layer that is formed using the slurry composition for a heat-resistant layer.

The water-soluble polymer that is contained in the slurry composition for a heat-resistant layer also includes an acid group-containing monomer unit. This acid group-containing monomer unit interacts with the non-conductive particles via electrostatic interactions in the slurry and thereby functions as a site of adsorption to the non-conductive particles. In addition, as a result of the slurry composition for a heat-resistant layer having a contact angle with a polyethylene substrate that is within a specific range, the slurry composition for a heat-resistant layer can be uniformly applied onto a substrate surface without the occurrence of cissing or excessive spreading. The presence of such interactions and the effect of the contact angle are thought to act in tandem to provide the presently disclosed slurry composition for a heat-resistant layer with excellent coatability.

Furthermore, as a result of the slurry composition for a heat-resistant layer having a pH that is within a specific range, aggregation of components (water-soluble polymer, non-conductive particles, etc.) of the slurry composition for a heat-resistant layer due to excessive intermolecular interactions does not occur. This is thought to result in the presently disclosed slurry composition for a heat-resistant layer having excellent dispersion stability.

Accordingly, the presently disclosed slurry composition for a heat-resistant layer has excellent dispersion stability and coatability. Moreover, by using the presently disclosed slurry composition for a heat-resistant layer, it is possible to obtain a heat-resistant layer having excellent heat shrinkage resistance.

### <Water-soluble polymer>

The water-soluble polymer contained in the slurry composition for a non-aqueous secondary battery heat-resistant layer is a component that can contribute to improving dispersion stability and coatability of the slurry composition for a heat-resistant layer. Moreover, the water-soluble polymer is a component that can also function as a binder in a heat-resistant layer formed using the slurry composition for a heat-resistant layer, that can impart adhesiveness to the heat-resistant layer formed using the slurry composition for a heat-resistant layer, and that can hold non-conductive particles contained in the heat-resistant layer so that the non-conductive particles do not detach from the heat-resistant layer.

Note that when a polymer is referred to as "water-soluble" in the present disclosure, this means that when 0.5 g of the polymer is dissolved in 100 g of water at a temperature of 25°C, insoluble content is less than 1.0 mass%.

The water-soluble polymer includes an amide group-containing monomer unit and an acid group-containing monomer unit in proportions that are within specific ranges and optionally further includes a nitrile group-containing monomer unit. Note that the water-soluble polymer may further include repeating units other than an amide group-containing monomer unit, an acid group-containing monomer unit, and a nitrile group-containing monomer unit (hereinafter, referred to as "other repeating units").

### <<Amide group-containing monomer unit>>

Examples of amide group-containing monomers that can form an amide group-containing monomer unit include N-vinylacetamide, (meth)acrylamide, dimethyl(meth)acrylamide, diethyl(meth)acrylamide, N-methoxymethyl(meth)acrylamide, and dimethylaminopropyl(meth)acrylamide. Of these amide group-containing monomers, acrylamide and methacrylamide are preferable from a viewpoint of even further increasing heat shrinkage resistance of a heat-resistant layer, with acrylamide being more preferable. One amide group-containing monomer may be used individually, or two or more amide group-containing monomers may be used in combination in a freely selected ratio.

Note that in the present disclosure, "(meth)acryl" is used to indicate "acryl" and/or "methacryl".

The proportional content of amide group-containing monomer units in the water-soluble polymer that is used herein is required to be not less than 60 mass% and not more than 98 mass% when the amount of all repeating units (all monomer units) in the water-soluble polymer is taken to be 100 mass%. Moreover, the proportional content of amide group-containing monomer units in the water-soluble polymer is preferably 65 mass% or more, more preferably 70 mass% or more, and even more preferably 76 mass% or more, and is preferably 95 mass% or less, and more preferably 90 mass% or less. Heat shrinkage resistance of a heat-resistant layer cannot be sufficiently ensured when the proportional content of amide group-containing monomer units in the water-soluble polymer is less than 60 mass% because rigidity of the water-soluble polymer decreases. On the other hand, dispersion stability of the slurry composition for a heat-resistant layer decreases when the proportional content of amide group-containing monomer units in the water-soluble polymer is more than 98 mass%.

### <<Acid group-containing monomer unit>>

Examples of acid group-containing monomers that can form an acid group-containing monomer unit include carboxy group-containing monomers, sulfo group-containing monomers, and phosphate group-containing monomers. Note that an acid group of an acid group-containing monomer unit may form a salt with an alkali metal, ammonia, or the like.

Examples of carboxy group-containing monomers that can form a carboxy group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

An acid anhydride that produces a carboxy group through hydrolysis can also be used as a carboxy group-containing monomer.

Examples of sulfo group-containing monomers that can form a sulfo group-containing monomer unit include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers that can form a phosphate group-containing monomer unit include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

One of the acid group-containing monomers described above may be used individually, or two or more of the acid group-containing monomers described above may be used in combination in a freely selected ratio. Moreover, from a viewpoint of improving close adherence of a heat-resistant layer and a substrate and even further improving coatability of the slurry composition for a heat-resistant layer, carboxy group-containing monomers are preferable, monocarboxylic acids are more preferable, and acrylic acid is even more preferable as an acid group-containing monomer that can form an acid group-containing monomer unit.

The proportional content of acid group-containing monomer units in the water-soluble polymer that is used herein is required to be not less than 1 mass% and not more than 25 mass% when the amount of all repeating units (all monomer units) in the water-soluble polymer is taken to be 100 mass%, is preferably 3 mass% or more, more preferably 5 mass% or more, and even more preferably 11 mass% or more, and is preferably 23 mass% or less, and more preferably 20 mass% or less. Coatability of the slurry composition for a heat-resistant layer decreases when the proportional content of acid group-containing monomer units in the water-soluble polymer is less than 1 mass%. In addition, close adherence of a heat-resistant layer and a substrate cannot be sufficiently ensured due to reduction of adsorption strength of the water-soluble polymer to the non-conductive particles. On the other hand, dispersion stability of the slurry composition for a heat-resistant layer decreases when the proportional content of acid group-containing monomer units in the water-soluble polymer is more than 25 mass%. In addition, rate characteristics of a secondary battery deteriorate because the amount of residual water in a heat-resistant layer formed using the slurry composition for a heat-resistant layer increases.

### «Nitrile group-containing monomer unit»

Examples of nitrile group-containing monomers that can form a nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile.

One of the nitrile group-containing monomers described above may be used individually, or two or more of the nitrile group-containing monomers described above may be used in combination in a freely selected ratio. From a viewpoint of improving close adherence of a heat-resistant layer and a substrate, acrylonitrile is preferable as a nitrile group-containing monomer that can form a nitrile group-containing monomer unit.

The proportional content of nitrile group-containing monomer units in the water-soluble polymer that is used herein when the amount of all repeating units (all monomer units) in the water-soluble polymer is taken to be 100 mass% is preferably 1 mass% or more, more preferably 3 mass% or more, and even more preferably 5 mass% or more, and is preferably 15 mass% or less, more preferably 13 mass% or less, and even more preferably 10 mass% or less. Close adherence of a heat-resistant layer and a substrate can be improved when the proportional content of nitrile group-containing monomer units in the water-soluble polymer is 1 mass% or more. On the other hand, heat shrinkage resistance of a heat-resistant layer can be even further increased when the proportional content of nitrile group-containing monomer units in the water-soluble polymer is 15 mass% or less.

### <<Other repeating units>>

No specific limitations are placed on other repeating units that may be included in the water-soluble polymer. For example, monomer units derived from known monomers, such as a (meth)acrylic acid ester monomer unit and a cross-linkable monomer unit subsequently described in the "Particulate polymer" section, may be included as other repeating units. Note that the water-soluble polymer may include one type of other repeating unit or may include two or more types of other repeating units in a freely selected ratio.

The proportional content of other repeating units when all repeating units (all monomer units) included in the water-soluble polymer are taken to be 100 mass% is preferably 10 mass% or less, more preferably 5 mass% or less, even more preferably 1 mass% or less, and particularly preferably 0 mass%.

### [Weight-average molecular weight]

The weight-average molecular weight of the water-soluble polymer that is used herein is preferably 50,000 or more, more preferably 100,000 or more, even more preferably 200,000 or more, and particularly preferably 400,000 or more, and is preferably 1,000,000 or less, more preferably 900,000 or less, even more preferably 800,000 or less, and particularly preferably 600,000 or less. Heat shrinkage resistance of a heat-resistant layer can be even further increased when the weight-average molecular weight of the water-soluble polymer is 50,000 or more because rigidity of the water-soluble polymer improves. On the other hand, coatability of the slurry composition for a heat-resistant layer can be further improved when the weight-average molecular weight of the water-soluble polymer is 1,000,000 or less because the viscosity of the slurry composition for a heat-resistant layer decreases.

Note that the weight-average molecular weight of the water-soluble polymer can be adjusted by altering the type or amount of a polymerization initiator and/or polymerization accelerator used in production of the water-soluble polymer, for example.

### <<Production method of water-soluble polymer>>

The water-soluble polymer described above can be produced by solution polymerization, suspension polymerization, bulk polymerization, emulsion polymerization, or the like, for example, without any specific limitations. Moreover, the polymerization method may be addition polymerization such as ionic polymerization, radical polymerization, or living radical polymerization. Note that a polymerization initiator, polymerization accelerator, emulsifier, dispersant, chain transfer agent, or the like used in the polymerization may be the same as typically used, and the used amount thereof may also be the same as typically used. In particular, aqueous solution polymerization in which water is used as a polymerization solvent is preferable because a solvent removal operation is not necessary, safety of the solvent is high, and a problem of mixing in of a surfactant does not arise.

Examples of polymerization initiators that can be used in production of the water-soluble polymer include known polymerization initiators such as sodium persulfate, ammonium persulfate, and potassium persulfate without any specific limitations. Of these polymerization initiators, ammonium persulfate is preferable. One polymerization initiator may be used individually, or two or more polymerization initiators may be used in combination in a freely selected ratio.

A known reductive polymerization accelerator such as L-ascorbic acid, sodium bisulfite, or tetramethylethylenediamine can be used as a polymerization accelerator without any specific limitations. Of these polymerization accelerators, L-ascorbic acid is preferable. One polymerization accelerator may be used individually, or two or more polymerization accelerators may be used in combination in a freely selected ratio.

### <<Content>>

The content of the specific water-soluble polymer described above in the slurry composition for a heat-resistant layer is preferably 0.5 parts by mass or more, more preferably 1 part by mass or more, and even more preferably 1.5 parts by mass or more in terms of solid content per 100 parts by mass of the non-conductive particles, and is preferably 5 parts by mass or less, and more preferably 4 parts by mass or less in terms of solid content per 100 parts by mass of the non-conductive particles. When the content of the water-soluble polymer in the slurry composition for a heat-resistant layer is 0.5 parts by mass or more in terms of solid content per 100 parts by mass of the non-conductive particles, heat shrinkage resistance of a heat-resistant layer can be even further increased. On the other hand, when the content of the water-soluble polymer in the slurry composition for a heat-resistant layer is 5 parts by mass or less in terms of solid content per 100 parts by mass of the non-conductive particles, the viscosity of the slurry composition for a heat-resistant layer can be restricted from becoming excessively high, and coatability of the slurry composition for a heat-resistant layer can be further improved. Moreover, electrolyte solution affinity of a heat-resistant layer can be improved, and rate characteristics of a secondary battery can be enhanced.

### <Non-conductive particles>

The non-conductive particles contained in the presently disclosed slurry composition for a heat-resistant layer are particles that maintain their shape without dissolving in water used as a dispersion medium in the slurry composition for a heat-resistant layer or in a non-aqueous electrolyte solution of a secondary battery. The non-conductive particles may be particles formed of an inorganic material (i.e., non-conductive inorganic particles) or particles formed of an organic material (i.e., non-conductive organic particles) that are electrochemically stable and are stably present in the environment of use of a secondary battery.

### <<Non-conductive inorganic particles>>

Preferable examples of non-conductive inorganic particles include particles of inorganic oxides such as aluminum oxide (alumina, Al₂O₃), hydrous aluminum oxide (boehmite, AlOOH), gibbsite (Al(OH)₃), silicon oxide, magnesium oxide (magnesia), magnesium hydroxide, calcium oxide, titanium oxide (titania), barium titanate (BaTiO₃), ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clay such as talc and montmorillonite. Of these examples, particles formed of alumina (alumina particles), particles formed of boehmite (boehmite particles), particles formed of barium sulfate (barium sulfate particles), and particles formed of titania (titania particles) are preferable as the non-conductive inorganic particles from a viewpoint of causing good adsorption of the water-soluble polymer and a particulate polymer and improving close adherence of a heat-resistant layer and a substrate, with alumina particles, boehmite particles, and barium sulfate particles being more preferable.

These particles may be subjected to element substitution, surface treatment, solid solution treatment, or the like as necessary. One of these types of particles may be used individually, or two or more of these types of particles may be used in combination in a freely selected ratio.

### <<Non-conductive organic particles>>

The non-conductive organic particles are an organic compound differing from a particulate polymer that serves as a binder. In other words, the non-conductive organic particles are normally formed of a polymer that does not have binding capacity. Preferable examples of non-conductive organic particles include particles of various cross-linked polymers such as cross-linked polymethyl methacrylate, cross-linked polystyrene, cross-linked polydivinylbenzene, cross-linked styrene-divinylbenzene copolymer, polystyrene, polyimide, polyamide, polyamide imide, melamine resin, phenolic resin, and benzoguanamine-formaldehyde condensate; and particles of heat-resistant polymers such as polysulfone, polyacrylonitrile, polyaramid, polyacetal, and thermoplastic polyimide. Moreover, a modified product or derivative of any of these can be used as the non-conductive organic particles. One of these types of particles may be used individually, or two or more of these types of particles may be used in combination in a freely selected ratio.

Note that the non-conductive organic particles are water-insoluble particles that are formed of a specific polymer. Also note that when particles are referred to as "water-insoluble" in the present disclosure, this means that when 0.5 g of the polymer is dissolved in 100 g of water at a temperature of 25°C, insoluble content is 90 mass% or more.

The glass-transition temperature of the non-conductive organic particles is preferably 110°C or higher, more preferably 150°C or higher, and even more preferably 200°C or higher. When the glass-transition temperature of the non-conductive organic particles is 110°C or higher, dispersion stability of the slurry composition for a heat-resistant layer can be further improved, and heat shrinkage resistance of a heat-resistant layer can be even further increased. Moreover, rate characteristics of a secondary battery can be enhanced. The upper limit for the glass-transition temperature of the non-conductive organic particles is not specifically limited and can be set as 400°C or lower, or can be set as 300°C or lower, for example.

Note that the "glass-transition temperature" referred to in the present disclosure can be measured by a method described in the EXAMPLES section of the present specification.

The volume-average particle diameter of the non-conductive particles is preferably 1.5 µm or less, more preferably 1.2 µm or less, and even more preferably 1.0 µm or less. When the volume-average particle diameter of the non-conductive particles is 1.5 µm or less, this results in densification of a heat-resistant layer and can even further increase heat shrinkage resistance of the heat-resistant layer. The lower limit for the volume-average particle diameter of the non-conductive particles is not specifically limited and can be set as 0.05 µm or more, or can be set as 0.1 µm or more, for example.

Note that the "volume-average particle diameter" referred to in the present disclosure is the "particle diameter (D50) at which, in a particle size distribution (by volume) measured by laser diffraction, cumulative volume calculated from a small diameter end of the distribution reaches 50%".

### [Production method of non-conductive particles]

The non-conductive inorganic particles can be produced by a known production method. In a case in which non-conductive organic particles are used as the non-conductive particles, the production method of these non-conductive organic particles may be solution polymerization, suspension polymerization, bulk polymerization, emulsion polymerization, or the like without any specific limitations. Moreover, the polymerization reaction may be addition polymerization such as ionic polymerization, radical polymerization, or living radical polymerization. In the polymerization, seed particles may be used to perform seeded polymerization. Moreover, polymerization solvents, emulsifiers, dispersants, polymerization initiators, chain transfer agents, and so forth that can be used in the polymerization are the same as typically used, and the used amounts thereof can also be the same as typically used.

Examples of polymerization initiators that can be used in production of the non-conductive organic particles include known polymerization initiators such as sodium persulfate, ammonium persulfate, potassium persulfate, and t-butyl peroxy-2-ethylhexanoate without any specific limitations. One polymerization initiator may be used individually, or two or more polymerization initiators may be used in combination in a freely selected ratio.

### <Wetting agent>

The wetting agent that can optionally be contained in the presently disclosed slurry composition for a heat-resistant layer may be a polyoxyalkylene glycol-based surfactant, a sulfonic acid-based surfactant, a fluorine-based surfactant, a silicon-based surfactant, an acetylene-based surfactant, or the like without any specific limitations.

Specific examples of polyoxyalkylene glycol-based surfactants include NOPTECHS ED-052 (product name) produced by San Nopco Limited.

Specific examples of sulfonic acid-based surfactants include dioctyl sulfosuccinate and salts thereof.

Specific examples of fluorine-based surfactants include the MEGAFACE^{®} (MEGAFACE is a registered trademark in Japan, other countries, or both) series produced by DIC Corporation, the Ftergent^{®} (Ftergent is a registered trademark in Japan, other countries, or both) series produced by Neos Company Limited, and the Surfion^{®} (Surflon is a registered trademark in Japan, other countries, or both) series produced by AGC.

Specific examples of silicon-based surfactants include dimethylpolysiloxane.

Specific examples of acetylene-based surfactants include the Surfynol^{®} (Surfynol is a registered trademark in Japan, other countries, or both) series and the Dynol series produced by Air Products and Chemicals Inc.

Of these wetting agents, polyoxyalkylene glycol-based surfactants, sulfonic acid-based surfactants, and fluorine-based surfactants are preferable from a viewpoint of further improving coatability of the slurry composition for a heat-resistant layer, with polyoxyalkylene glycol-based surfactants and sulfonic acid-based surfactants being more preferable.

Note that one of these wetting agents may be used individually, or two or more of these wetting agents may be used in combination in a freely selected ratio.

### <<Content>>

The content of the above-described wetting agent in the slurry composition for a heat-resistant layer is preferably 0.1 parts by mass or more, and more preferably 0.2 parts by mass or more per 100 parts by mass of the non-conductive particles, and is preferably 1.0 parts by mass or less, more preferably 0.7 parts by mass or less, and even more preferably 0.4 parts by mass or less per 100 parts by mass of the non-conductive particles. By setting the content of the wetting agent as 0.1 parts by mass or more per 100 parts by mass of the non-conductive particles, coatability of the slurry composition for a heat-resistant layer can be further improved because wettability of the slurry composition for a heat-resistant layer with respect to a substrate improves, and the occurrence of cissing is inhibited. Moreover, by setting the content of the wetting agent as 1.0 parts by mass or less per 100 parts by mass of the non-conductive particles, heat shrinkage resistance of a heat-resistant layer can be even further increased, and close adherence of a heat-resistant layer and a substrate can be improved. Moreover, rate characteristics of a secondary battery can be enhanced.

### <Particulate polymer>

The particulate polymer that can optionally be contained in the presently disclosed slurry composition for a heat-resistant layer is a component that can function as a binder in the same manner as the previously described water-soluble polymer and is normally formed of a polymer having binding capacity. The inclusion of the particulate polymer in the slurry composition for a heat-resistant layer can improve close adherence of an obtained heat-resistant layer and a substrate. The particulate polymer is water-insoluble particles that are formed of a specific polymer.

The particulate polymer is not specifically limited so long as it is a particulate polymer that is water-insoluble and that can be dispersed in a dispersion medium such as water. For example, a conjugated diene polymer, a fluoropolymer, or an acrylic polymer can be used as the particulate polymer. Of these examples, it is preferable to use an acrylic polymer. By using an acrylic polymer as the particulate polymer contained in the slurry composition for a heat-resistant layer, it is possible to improve close adherence of a heat-resistant layer and a substrate and to increase oxidation resistance of a battery member that includes a heat-resistant layer.

Note that one particulate polymer may be used individually, or two or more particulate polymers may be used in combination in a freely selected ratio.

### <<Conjugated diene polymer>>

The conjugated diene polymer is a polymer that includes a conjugated diene monomer unit. Specific examples of conjugated diene polymers include, but are not specifically limited to, copolymers that include an aromatic vinyl monomer unit and an aliphatic conjugated diene monomer unit such as styrene-butadiene copolymer (SBR), butadiene rubber (BR), isoprene rubber, acrylic rubber (NBR) (copolymer including an acrylonitrile unit and a butadiene unit), and hydrogenated products of any thereof.

### «Fluoropolymer»

Specific examples of fluoropolymers include, but are not specifically limited to, polyvinylidene fluoride (PVdF) and polyvinylidene fluoridehexafluoropropylene (PVdF-HFP) copolymer.

### «Acrylic polymer»

The acrylic polymer is a polymer that includes a (meth)acrylic acid ester monomer unit. The acrylic polymer may include repeating units other than a (meth)acrylic acid ester monomer unit. Examples of such repeating units include, but are not specifically limited to, a hydrophilic group-containing monomer unit, a cross-linkable monomer unit, and monomer units other than a (meth)acrylic acid ester monomer unit, a hydrophilic group-containing monomer unit, and a cross-linkable monomer unit (i.e., other monomer units).

### [(Meth)acrylic acid ester monomer unit]

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, and 2-ethylhexyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, and 2-ethylhexyl methacrylate. One of these (meth)acrylic acid ester monomers may be used individually, or two or more of these (meth)acrylic acid ester monomers may be used in combination in a freely selected ratio. Of these examples, n-butyl acrylate, 2-ethylhexyl acrylate, and ethyl acrylate are preferable as (meth)acrylic acid ester monomers.

### [Hydrophilic group-containing monomer unit]

Examples of hydrophilic group-containing monomers that can form a hydrophilic group-containing monomer unit include "acid group-containing monomers" that were described in the "Water-soluble polymer" section and also hydroxy group-containing monomers. Examples of hydroxy group-containing monomers include hydroxy group-containing (meth)acrylamide monomers such as N-hydroxymethylacrylamide, N-hydroxyethylacrylamide, N-hydroxypropyl acrylamide, N-hydroxymethylmethacrylamide, N-hydroxyethylmethacrylamide, and N-hydroxypropylmethacrylamide; and hydroxy group-containing (meth)acrylate monomers such as 2-hydroxymethyl acrylate, 2-hydroxyethyl acrylate, 2-hydroxypropyl acrylate, 2-hydroxybutyl acrylate, 2-hydroxymethyl methacrylate, 2-hydroxyethyl methacrylate, 2-hydroxypropyl methacrylate, and 2-hydroxybutyl methacrylate. One of these hydrophilic group-containing monomers may be used individually, or two or more of these hydrophilic group-containing monomers may be used in combination in a freely selected ratio. Of these examples, methacrylic acid and acrylic acid are preferable as hydrophilic group-containing monomers.

Note that in the present disclosure, "(meth)acrylate" is used to indicate "acrylate" and/or "methacrylate".

### [Cross-linkable monomer unit]

A cross-linkable monomer that can form a cross-linkable monomer unit is a monomer having at least two polymerizable double bonds (for example, olefinic double bonds) per one molecule. Examples of cross-linkable monomers include polyfunctional (meth)acrylates such as allyl (meth)acrylate, ethylene di(meth)acrylate, ethylene glycol di(meth)acrylate, diethylene glycol di(meth)acrylate, triethylene glycol di(meth)acrylate, tetraethylene glycol di(meth)acrylate, and trimethylolpropane tri(meth)acrylate; polyfunctional allyl/vinyl ethers such as dipropylene glycol diallyl ether, polyglycol diallyl ether, triethylene glycol divinyl ether, hydroquinone diallyl ether, and tetraallyloxyethane; divinylbenzene; vinyl glycidyl ether; allyl glycidyl ether; N-methylolacrylamide; and acrylamide. One of these cross-linkable monomers may be used individually, or two or more of these cross-linkable monomers may be used in combination in a freely selected ratio. Of these examples, allyl glycidyl ether and polyfunctional (meth)acrylates are preferable, and allyl glycidyl ether and allyl methacrylate are more preferable as cross-linkable monomers.

### [Other monomer units]

No specific limitations are placed on other monomers that can form other monomer units so long as they are monomers other than the (meth)acrylic acid ester monomers, hydrophilic group-containing monomers, and cross-linkable monomers described above. Specific examples of other monomers include "nitrile group-containing monomers" described in the "Water-soluble polymer" section; and styrenic monomers such as styrene, chlorostyrene, vinyltoluene, t-butylstyrene, methyl vinylbenzoate, vinylnaphthalene, chloromethylstyrene, and α-methylstyrene. One of these other monomers may be used individually, or two or more of these other monomers may be used in combination in a freely selected ratio. Of these examples, acrylonitrile is preferable as another monomer.

The glass-transition temperature of the particulate polymer is preferably lower than 20°C, and more preferably lower than 15°C. When the glass-transition temperature of the particulate polymer is lower than 20°C, close adherence of a heat-resistant layer and a substrate can be improved. The lower limit for the glass-transition temperature of the particulate polymer is not specifically limited and can be set as higher than -120°C, or can be set as higher than -60°C, for example.

The volume-average particle diameter of the particulate polymer is preferably 0.05 µm or more, and more preferably 0.1 µm or more, and is preferably 1 µm or less, and more preferably 0.5 µm or less. When the volume-average particle diameter of the particulate polymer is 0.05 µm or more, rate characteristics of a secondary battery can be enhanced. On the other hand, when the volume-average particle diameter of the particulate polymer is 1 µm or less, close adherence of a heat-resistant layer and a substrate can be improved.

### <<Production method of particulate polymer>>

The polymerization method of the particulate polymer may be solution polymerization, suspension polymerization, bulk polymerization, emulsion polymerization, or the like, for example, without any specific limitations. Moreover, the polymerization reaction may be addition polymerization such as ionic polymerization, radical polymerization, or living radical polymerization. Furthermore, polymerization solvents, emulsifiers, dispersants, polymerization initiators, chain transfer agents, and so forth that can be used in the polymerization are the same as typically used, and the used amounts thereof can also be the same as typically used.

### <<Content>>

The content of the particulate polymer in the slurry composition for a heat-resistant layer, in terms of solid content per 100 parts by mass of the non-conductive particles, is preferably 6 parts by mass or less, more preferably 5 parts by mass or less, even more preferably 4 parts by mass or less, further preferably 3 parts by mass or less, and particularly preferably 0 parts by mass (i.e., the slurry composition for a heat-resistant layer does not contain the particulate polymer). When the content of the particulate polymer in the slurry composition for a heat-resistant layer is 6 parts by mass or less in terms of solid content per 100 parts by mass of the non-conductive particles, electrolyte solution affinity of a heat-resistant layer can be improved, and rate characteristics of a secondary battery can be enhanced.

### <<Content ratio>>

No specific limitations are placed on the content ratio (in terms of solid content) of the water-soluble polymer and the particulate polymer in the presently disclosed slurry composition for a heat-resistant layer. For example, the content of the particulate polymer in the slurry composition for a heat-resistant layer is preferably 80 mass% or less, more preferably 50 mass% or less, even more preferably 20 mass% or less, and particularly preferably 0 mass% (i.e., the slurry composition for a heat-resistant layer does not contain the particulate polymer) of the total content of the water-soluble polymer and the particulate polymer. When the proportion constituted by the particulate polymer among the total of the water-soluble polymer and the particulate polymer is 80 mass% or less, electrolyte solution affinity of a heat-resistant layer can be improved, and rate characteristics of a secondary battery can be enhanced.

### <Dispersion medium>

The dispersion medium of the presently disclosed slurry composition for a heat-resistant layer is not specifically limited so long as it includes water. For example, the presently disclosed slurry composition for a heat-resistant layer may contain just water as the dispersion medium, or a mixture of water and an organic solvent (for example, an ester, a ketone, or an alcohol) may be used as the dispersion medium. Note that the presently disclosed slurry composition for a heat-resistant layer may contain one type of organic solvent or may contain two or more types of organic solvents.

### <Other components>

Besides the components described above, the presently disclosed slurry composition for a heat-resistant layer may contain reinforcing materials, leveling agents, dispersants, pH modifiers (for example, hydrochloric acid; ammonia; hydroxides of alkali metals such as lithium hydroxide, sodium hydroxide, and potassium hydroxide; and hydroxides of alkaline earth metals such as calcium hydroxide and magnesium hydroxide), viscosity modifiers, additives for electrolyte solution, preservatives, fungicides, defoamers, polymerization inhibitors, and binders other than the water-soluble polymer and the particulate polymer according to the present disclosure. Commonly known examples of such components can be used without any specific limitations so long as they do not affect battery reactions. One other component may be used individually, or two or more other components may be used in combination in a freely selected ratio.

Examples of dispersants that can be used include, but are not specifically limited to, polycarboxylic acids such as polyacrylic acid, sodium polycarboxylates such as sodium polyacrylate, ammonium polycarboxylates such as ammonium polyacrylate, polycarboxylic acid-sulfonic acid copolymers, sodium polycarboxylate-sulfonate copolymers, and ammonium polycarboxylate-sulfonate copolymers. Of these dispersants, sodium polyacrylate is preferable.

The content of the dispersant in the slurry composition for a heat-resistant layer is preferably 0.1 parts by mass or more, more preferably 0.2 parts by mass or more, and even more preferably 0.3 parts by mass or more per 100 parts by mass of the non-conductive particles, and is preferably 5 parts by mass or less, more preferably 3 parts by mass or less, and even more preferably 1 part by mass or less per 100 parts by mass of the non-conductive particles. By setting the content of the dispersant in the slurry composition for a heat-resistant layer as 0.1 parts by mass or more per 100 parts by mass of the non-conductive particles, dispersion stability of the slurry composition for a heat-resistant layer can be further improved, and heat shrinkage resistance of a heat-resistant layer can be even further increased. Moreover, by setting the content of the dispersant in the slurry composition for a heat-resistant layer as 5 parts by mass or less per 100 parts by mass of the non-conductive particles, the amount of residual water in a heat-resistant layer formed using the slurry composition for a heat-resistant layer can be reduced, and rate characteristics of a secondary battery can be enhanced.

Specific examples of other components besides the dispersant described above include those described in WO2012/115096A1, for example, but are not specifically limited thereto.

### <Production of slurry composition for non-aqueous secondary battery heat-resistant layer>

The presently disclosed slurry composition for a heat-resistant layer can be produced by mixing the above-described water-soluble polymer, non-conductive particles, and water, and also the optional wetting agent, particulate polymer, and other components by a known method. Specifically, the slurry composition for a heat-resistant layer can be produced by mixing the above-described components using a mixer such as a ball mill, a sand mill, a bead mill, a pigment disperser, a grinding machine, an ultrasonic disperser, a homogenizer, a planetary mixer, or a FILMIX.

Note that in a case in which the water-soluble polymer, non-conductive organic particles, and/or particulate polymer are produced through polymerization in an aqueous solvent, these can be mixed while still in the form of an aqueous solution or water dispersion to produce the slurry composition for a heat-resistant layer that contains water as a solvent.

### [pH]

The pH of the presently disclosed slurry composition for a heat-resistant layer is required to be not lower than 7.0 and not higher than 10.0, is preferably 7.5 or higher, and is preferably 9.5 or lower. Dispersion stability of the slurry composition for a heat-resistant layer decreases when the pH of the slurry composition for a heat-resistant layer is lower than 7.0. Likewise, dispersion stability of the slurry composition for a heat-resistant layer decreases when the pH of the slurry composition for a heat-resistant layer is higher than 10.0.

Note that the pH of the slurry composition for a heat-resistant layer can be adjusted through addition of a pH modifier such as previously described, for example.

### [Viscosity]

The viscosity of the presently disclosed slurry composition for a heat-resistant layer is required to be not less than 10 mPa·s and not more than 300 mPa·s, is preferably 30 mPa·s or more, and more preferably 73 mPa·s or more, and is preferably 285 mPa·s or less, more preferably 218 mPa·s or less, even more preferably 200 mPa·s or less, further preferably 178 mPa·s or less, and particularly preferably 160 mPa·s or less. Coatability of the slurry composition for a heat-resistant layer decreases when the viscosity of the slurry composition for a heat-resistant layer is less than 10 mPa·s. Likewise, coatability of the slurry composition for a heat-resistant layer decreases when the viscosity of the slurry composition for a heat-resistant layer is more than 300 mPa·s.

Note that the viscosity of the slurry composition for a heat-resistant layer can be adjusted by altering the types and amounts (concentrations) of the water-soluble polymer and/or particulate polymer used to produce the slurry composition for a heat-resistant layer, the pH of the slurry composition for a heat-resistant layer, or the particle diameter of the non-conductive particles used to produce the slurry composition for a heat-resistant layer, for example.

### [Contact angle with polyethylene substrate]

The contact angle with a polyethylene substrate of the presently disclosed slurry composition for a heat-resistant layer is required to be not less than 20° and not more than 50°, is preferably 25° or more, and more preferably 27° or more, and is preferably 47° or less, more preferably 45° or less, even more preferably 40° or less, and particularly preferably 36° or less. Coatability of the slurry composition for a heat-resistant layer decreases when the contact angle with a polyethylene substrate of the slurry composition for a heat-resistant layer is less than 20° because there is excessive spreading of the slurry composition for a heat-resistant layer on a substrate. On the other hand, coatability of the slurry composition for a heat-resistant layer decreases when the contact angle with a polyethylene substrate of the slurry composition for a heat-resistant layer is more than 50° because cissing of the slurry composition for a heat-resistant layer on a substrate more readily occurs.

Note that the contact angle with a polyethylene substrate of the slurry composition for a heat-resistant layer can be adjusted by altering the type or amount (concentration) of wetting agent. Specifically, the contact angle with a polyethylene substrate of the slurry composition for a heat-resistant layer can be reduced by increasing the amount (concentration) of the wetting agent in the slurry composition for a heat-resistant layer.

### (Heat-resistant layer for non-aqueous secondary battery)

The presently disclosed heat-resistant layer is formed from the presently disclosed slurry composition for a heat-resistant layer set forth above and can be formed by, for example, applying the slurry composition for a heat-resistant layer set forth above onto the surface of a suitable substrate to form a coating film and subsequently drying the coating film that is formed. In other words, the presently disclosed heat-resistant layer is formed of a dried product of the slurry composition for a heat-resistant layer set forth above and normally contains at least non-conductive particles and a water-soluble polymer. Note that components contained in the heat-resistant layer are components that were contained in the slurry composition for a heat-resistant layer set forth above, and thus the preferred ratio of these components is also the same as the preferred ratio of the components in the slurry composition for a heat-resistant layer.

The presently disclosed heat-resistant layer has excellent heat shrinkage resistance as a result of being formed from the presently disclosed slurry composition for a heat-resistant layer.

### <Substrate>

No limitations are placed on the substrate onto which the slurry composition for a heat-resistant layer is applied. For example, a coating film of the slurry composition for a heat-resistant layer may be formed on the surface of a releasable substrate, this coating film may be dried to form a heat-resistant layer, and then the releasable substrate may be peeled from the heat-resistant layer. The heat-resistant layer that is peeled from the releasable substrate in this manner can be used as a free-standing film in formation of a battery member of a secondary battery.

However, from a viewpoint of omitting a step of peeling the heat-resistant layer and increasing battery member production efficiency, it is preferable to use a separator substrate or an electrode substrate as the substrate, and more preferable to use a separator substrate as the substrate. Specifically, the slurry composition for a heat-resistant layer is preferably applied onto a separator substrate or an electrode substrate, and is more preferably applied onto a separator substrate.

### <<Separator substrate>>

The separator substrate is not specifically limited and may be a known separator substrate such as an organic separator substrate. The organic separator substrate is a porous member that is made of an organic material. Examples of organic separator substrates include microporous membranes and non-woven fabrics containing a polyolefin resin such as polyethylene or polypropylene, an aromatic polyamide resin, or the like, with a microporous membrane or non-woven fabric made of polyethylene being preferable due to the excellent strength thereof.

The surface of the separator substrate onto which the slurry composition for a heat-resistant layer is applied may be subjected to surface treatment such as corona treatment or plasma treatment in advance. By performing surface treatment of the separator substrate, coatability of the slurry composition for a heat-resistant layer can be further improved because wettability of the slurry composition for a heat-resistant layer with respect to the separator substrate improves, and the occurrence of cissing is inhibited.

### «Electrode substrate»

The electrode substrate (positive electrode substrate or negative electrode substrate) is not specifically limited and may be an electrode substrate obtained by forming an electrode mixed material layer that contains an electrode active material and a binder on a current collector.

The current collector, the electrode active material (positive electrode active material or negative electrode active material) and the binder for an electrode mixed material layer (binder for a positive electrode mixed material layer or binder for a negative electrode mixed material layer) in the electrode mixed material layer, and the method by which the electrode mixed material layer is formed on the current collector can be known examples thereof such as any of those described in JP2013-145763A, for example.

### <Formation method of heat-resistant layer for non-aqueous secondary battery>

Examples of methods by which the heat-resistant layer may be formed on a substrate such as the separator substrate or the electrode substrate described above include:
(1) a method in which the presently disclosed slurry composition for a heat-resistant layer is applied onto the surface of the substrate and is then dried;
(2) a method in which the substrate is immersed in the presently disclosed slurry composition for a heat-resistant layer and is subsequently dried; and
(3) a method in which the presently disclosed slurry composition for a heat-resistant layer is applied onto a releasable substrate and is dried to produce a heat-resistant layer that is then transferred onto the surface of the substrate.

Of these methods, method (1) is particularly preferable since it allows simple control of the thickness of the heat-resistant layer. In more detail, method (1) includes a step of applying the slurry composition for a heat-resistant layer onto the substrate (application step) and a step of drying the slurry composition for a heat-resistant layer that has been applied onto the substrate to form a heat-resistant layer (drying step).

### «Application step»

Examples of methods by which the slurry composition for a heat-resistant layer may be applied onto the substrate in the application step include, but are not specifically limited to, doctor blading, reverse roll coating, direct roll coating, gravure coating, extrusion coating, and brush coating.

### <<Drying step>>

The method by which the slurry composition for a heat-resistant layer on the substrate is dried in the drying step can be a commonly known method without any specific limitations. Examples of drying methods that may be used include drying by warm, hot, or low-humidity air, drying in a vacuum, and drying through irradiation with infrared light, electron beams, or the like.

### (Heat-resistant layer-equipped separator for non-aqueous secondary battery)

A feature of the presently disclosed heat-resistant layer-equipped separator for a non-aqueous secondary battery is that it includes a separator substrate and the heat-resistant layer set forth above formed on at least one surface of the separator substrate. The presently disclosed heat-resistant layer-equipped separator has excellent electrolyte solution injectability and can cause a secondary battery to display good rate characteristics as a result of having the presently disclosed heat-resistant layer set forth above formed on the surface of the separator substrate.

Any of the same separator substrates as described in the "Heat-resistant layer for non-aqueous secondary battery" section can be used as the separator substrate that is included in the presently disclosed heat-resistant layer-equipped separator, and the preferred type thereof can also be the same.

### <Formation method of heat-resistant layer-equipped separator for non-aqueous secondary battery>

The formation method of the presently disclosed heat-resistant layer-equipped separator can be in accordance with any of the same methods as for the formation method of the heat-resistant layer described in the "Heat-resistant layer for non-aqueous secondary battery" section. Note that the heat-resistant layer-equipped separator may have heat-resistant layers formed at both sides of the separator substrate or may have a heat-resistant layer formed at just one side of the separator substrate.

### (Non-aqueous secondary battery)

The presently disclosed secondary battery includes the presently disclosed heat-resistant layer-equipped separator set forth above. More specifically, the presently disclosed secondary battery is a secondary battery that includes a positive electrode, a negative electrode, a separator, and an electrolyte solution and in which the presently disclosed heat-resistant layer-equipped separator is used as the separator. The presently disclosed secondary battery can display excellent rate characteristics as a result of including the presently disclosed heat-resistant layer-equipped separator set forth above.

### <Positive electrode, negative electrode, and separator>

The separator used in the presently disclosed secondary battery is the presently disclosed heat-resistant layer-equipped separator set forth above. Known positive electrodes and negative electrodes can be used as the positive electrode and the negative electrode without any specific limitations.

### <Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region.

The concentration of the electrolyte in the electrolyte solution may be adjusted as appropriate. Furthermore, known additives may be added to the electrolyte solution.

### <Production method of non-aqueous secondary battery>

The presently disclosed non-aqueous secondary battery can be produced by, for example, stacking the positive electrode and the negative electrode with the separator in-between, performing rolling, folding, or the like of the resultant laminate, as necessary, in accordance with the battery shape to place the laminate in a battery container, injecting the electrolyte solution into the battery container, and sealing the battery container. Note that the separator is the presently disclosed heat-resistant layer-equipped separator. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. In the examples and comparative examples, the following methods were used to evaluate the weight-average molecular weight of a water-soluble polymer, the glass-transition temperature and volume-average particle diameter of a particulate polymer, the pH, viscosity, contact angle with a polyethylene substrate, dispersion stability, and coatability of a slurry composition for a heat-resistant layer, the heat shrinkage resistance and electrolyte solution affinity of a heat-resistant layer, the water contact angle of a separator substrate, and the rate characteristics of a secondary battery.

### <Weight-average molecular weight of water-soluble polymer>

An aqueous solution containing a water-soluble polymer produced in each example or comparative example was diluted and adjusted to a concentration of 0.5%. Next, the aqueous solution was adjusted to pH 10 to 12 through addition of caustic soda, was immersed in a water bath of 80°C or higher for 1 hour, and was subsequently diluted to 0.025% with the eluent indicated below to prepare a sample. The sample was analyzed by gel permeation chromatography under the following conditions to determine the weight-average molecular weight of the water-soluble polymer.
Apparatus: Gel permeation chromatograph GPC (Instrument No. GPC-26)
Detector: Differential refractive index detector RI (produced by Showa Denko K.K.; product name: RI-201; sensitivity: 32)
Column: TSKgel GMPWXL × 2 columns (∅7.8 mm × 30 cm; produced by Tosoh Corporation)
Solvent: 0.1 M Tris buffer solution (pH 9, 0.1 M potassium chloride added)
Flow rate: 0.7 mL/min
Column temperature: 40°C
Injection volume: 0.2 mL
Reference samples: Monodisperse polyethylene oxide (PEO) and polyethylene glycol (PEG) produced by Tosoh Corporation and Sigma-Aldrich

### <Glass-transition temperature of particulate polymer>

A film-shaped sample obtained by drying a water dispersion containing a particulate polymer at a temperature of 25°C for 48 hours was used as a measurement sample.

The measurement sample was weighed into an aluminum pan in an amount of 10 mg and was then measured by a differential scanning calorimeter (produced by SII NanoTechnology Inc.; product name: EXSTAR DSC6220) under conditions prescribed in JIS Z8703 with a measurement temperature range of -100°C to 200°C and a heating rate of 20°C/min to obtain a differential scanning calorimetry (DSC) curve. Note that an empty aluminum pan was used as a reference. In the heating process, the temperature at which a derivative signal (DDSC) exhibited a peak was determined as the glass-transition temperature (°C). Note that since multiple peaks were measured, the temperature at which a peak of large displacement was exhibited was taken to be the glass-transition temperature of the particulate polymer.

### <Volume-average particle diameter of particulate polymer>

The volume-average particle diameter of a particulate polymer was measured by laser diffraction. Specifically, a water dispersion containing a particulate polymer (adjusted to solid content concentration of 0.1%) was used as a sample. In a particle diameter distribution (by volume) measured using a laser diffraction particle size analyzer (produced by Beckman Coulter, Inc.; product name: LS-13 320), the particle diameter D50 at which cumulative volume calculated from a small diameter end of the distribution reached 50% was taken to be the volume-average particle diameter.

### <pH of slurry composition for heat-resistant layer>

The pH of a slurry composition for a heat-resistant layer was measured at a temperature of 25°C using a desktop pH meter (produced by Horiba, Ltd.; product name: F-51) that had been calibrated with pH reference solutions (pH 4, pH 7, and pH 9).

### <Viscosity of slurry composition for heat-resistant layer>

A slurry composition for a heat-resistant layer was measured in accordance with JIS Z8803:1991 using a single-cylinder rotational viscometer (25°C; rotation speed: 60 rpm; spindle shape: 2), and a value at 60 seconds after the start of measurement was taken to be the viscosity of the slurry composition for a heat-resistant layer.

### <Contact angle with polyethylene substrate of slurry composition for heat-resistant layer>

The contact angle between a slurry composition for a heat-resistant layer produced in each example or comparative example and the surface of a polyethylene substrate (produced by Asahi Kasei Corporation; product name: ND412; thickness: 12 µm; no surface treatment; water contact angle: 100°) was measured. A value at 60 seconds after dripping 2 µL of the slurry composition for a heat-resistant layer onto the polyethylene substrate was recorded using a portable contact angle meter (produced by Kyowa Interface Science Co., Ltd.; product name: PCA-11). Measurements were made for 10 arbitrary points on the polyethylene substrate, and an average value thereof was taken to be the contact angle.

### <Dispersion stability of slurry composition for heat-resistant layer>

A slurry composition for a heat-resistant layer produced in each example or comparative example was poured in an amount of 40 mL into a test tube made of polypropylene that had a capacity of 50 mL. A centrifuge was used to perform 30 minutes of treatment at 2,000 rpm so as to cause centrifugal sedimentation and obtain a sediment layer. The material balance was calculated from the height of the sediment layer, and the loading rate (= {(solid content concentration of slurry (volume%) × slurry volume in test tube)/sediment layer volume} × 100%) was evaluated. A higher loading rate indicates that non-conductive particles have better dispersibility in the slurry composition for a heat-resistant layer and that the slurry composition for a heat-resistant layer has better dispersion stability.
A: Loading rate of 55% or more
B: Loading rate of not less than 50% and less than 55%
C: Loading rate of less than 50%

Note that the volume% solid content concentration in the slurry was calculated from the weight% solid content concentration using the specific gravity of each material. The specific gravity of each material used in the examples and comparative examples was as follows (units: kg/m³).
Barium sulfate (BaSO₄) particles: 4.5
Alumina (Al₂O₃) particles: 4.0
Boehmite (AlOOH) particles: 3.0
Sodium polyacrylate: 1.2
Water-soluble polymer: 1.1
Particulate polymer: 1.0
Polyoxyalkylene glycol-based surfactant (NOPTECHS ED-052): 1.1
Dioctyl sulfosuccinate: 1.1

### <Coatability of slurry composition for heat-resistant layer>

The external appearance of a heat-resistant layer of a separator including a heat-resistant layer at one side (heat-resistant layer-equipped separator) that was produced in each example or comparative example was visually observed and was evaluated as follows.
A: Range in which aggregates, streaks, and/or cissing are not observed is 30 cm × 30 cm or more
B: Range in which aggregates, streaks, and/or cissing are not observed is not less than 10 cm × 10 cm and less than 30 cm × 30 cm
C: Range in which aggregates, streaks, and/or cissing are not observed is less than 10 cm × 10 cm

### <Heat shrinkage resistance of heat-resistant layer>

A heat-resistant layer-equipped separator produced in each example or comparative example was cut out as a square of 12 cm in width by 12 cm in length and then a square having a side length of 10 cm was drawn in an inner part of the cut-out square to obtain a test specimen. The test specimen was placed inside a 150°C constant-temperature tank, was left for 1 hour, and then the area change of the square drawn in the inner part was calculated (= {(area of square before being left - area of square after being left)/area of square before being left} × 100%) as a heat shrinkage rate and was evaluated by the following standard. A smaller heat shrinkage rate indicates that the heat-resistant layer has better heat shrinkage resistance.
A: Heat shrinkage rate of less than 10%
B: Heat shrinkage rate of not less than 10% and less than 20%
C: Heat shrinkage rate of 20% or more

### <Electrolyte solution affinity of heat-resistant layer>

A heat-resistant layer-equipped separator produced in each example or comparative example was cut out as a square of 5 cm in width by 5 cm in length, was attached onto a metal frame having an internal diameter of 2 cm, and then 2 µL of propylene carbonate was dripped onto a central section of the surface of the heat-resistant layer-equipped separator. The infiltration area of propylene carbonate 1 minute after dripping was measured and was evaluated by the following standard. A larger infiltration area indicates that the heat-resistant layer has better electrolyte solution affinity.
A: Infiltration area of 25 mm² or more
B: Infiltration area of not less than 15 mm² and less than 25 mm²
C: Infiltration area of less than 15 mm²

### <Water contact angle of separator substrate>

The water contact angle of the surface of a separator substrate was measured. A value at 60 seconds after dripping of a 2 µL water droplet was recorded using a portable contact angle meter (produced by Kyowa Interface Science Co., Ltd.; product name: PCA-11). Measurements were made for 10 arbitrary points on the separator substrate, and an average value thereof was taken to be the water contact angle of the separator substrate.

### <Rate characteristics of secondary battery>

A lithium ion secondary battery produced in each example or comparative example was subjected to a charge/discharge cycle of charging to 4.35 V with a 0.2C constant current and discharging to 3.0 V with a 0.2C constant current in a 25°C environment and a charge/discharge cycle of charging to 4.35 V with a 0.2C constant current and discharging to 3.0 V with a 2.0C constant current in a 25°C environment. A ratio of the discharge capacity at 2.0C relative to the discharge capacity at 0.2C was calculated (= {(discharge capacity at 2.0C)/(discharge capacity at 0.2C)} × 100%) as a capacity change rate ΔC' and was evaluated by the following standard. A larger capacity change rate ΔC' indicates that the secondary battery has better rate characteristics.
A: Capacity change rate ΔC' of 80% or more
B: Capacity change rate ΔC' of not less than 70% and less than 80%
C: Capacity change rate ΔC' of less than 70%

### (Example 1)

### <Production of aqueous solution containing water-soluble polymer>

A 10 L flask equipped with a septum was charged with 6,335 g of deionized water and 170 g of a 2.0% aqueous solution of L-ascorbic acid as a polymerization accelerator. These materials were heated to a temperature of 40°C, and the inside of the flask was purged with nitrogen gas at a flow rate of 100 mL/min. Next, 1,053 g (81.0%) of acrylamide as an amide group-containing monomer, 143 g (11.0%) of acrylic acid as an acid group-containing monomer, and 104 g (8.0%) of acrylonitrile as a nitrile group-containing monomer were mixed and were injected into the flask using a syringe. Thereafter, 180 g of a 5.0% aqueous solution of ammonium persulfate as a polymerization initiator was added into the flask using a syringe, and the reaction temperature was set to 60°C. After 2 hours, 90 g of a 5.0% aqueous solution of ammonium persulfate as a polymerization initiator and 85 g of a 2.0% aqueous solution of L-ascorbic acid as a polymerization accelerator were added in order to further raise the reaction conversion rate. After a further 2 hours, 90 g of a 5.0% aqueous solution of ammonium persulfate as a polymerization initiator and 85 g of a 2.0% aqueous solution of L-ascorbic acid as a polymerization accelerator were added. After 2 hours, 34 g of a 5% aqueous solution of sodium nitrite as a reaction inhibitor was added into the flask and stirred. Thereafter, the flask was cooled to 40°C, was converted to an air atmosphere, and the pH of the system was adjusted to 8.0 using 8% lithium hydroxide aqueous solution to produce an aqueous solution containing a water-soluble polymer.

The weight-average molecular weight of the obtained water-soluble polymer was measured. The result is shown in Table 1.

### <Production of slurry composition for non-aqueous secondary battery heat-resistant layer>

Barium sulfate particles (produced by Takehara Kagaku Kogyo Co., Ltd.; product name: TS-3; volume-average particle diameter: 0.6 µm) were used as non-conductive particles, and sodium polyacrylate (produced by Nippon Shokubai Co., Ltd.; product name: Aqualic GL366) was used as a dispersant.

A dispersion liquid was obtained by mixing 100 parts of the non-conductive particles, 0.5 parts of the dispersant, and deionized water and performing 1 hour of treatment thereof in a bead mill (produced by Ashizawa Finetech Ltd.; product name: LMZ015). In addition, 3 parts in terms of solid content of the aqueous solution containing the water-soluble polymer obtained as described above, and 0.2 parts of a polyoxyalkylene glycol-based surfactant (produced by San Nopco Limited; product name: NOPTECHS ED-052) and 0.1 parts of dioctyl sulfosuccinate as wetting agents were mixed to produce a slurry composition for a heat-resistant layer having a solid content concentration of 50%.

The pH, viscosity, contact angle with a polyethylene substrate, dispersion stability, and coatability of the slurry composition for a heat-resistant layer obtained in this manner were evaluated. The results are shown in Table 1.

### <Production of separator including heat-resistant layer at one side (heat-resistant layer-equipped separator)>

A separator substrate made of polyethylene (produced by Asahi Kasei Corporation; product name: ND412; thickness: 12 µm; not surface treated; water contact angle: 100°) was prepared as a separator substrate. The slurry composition for a heat-resistant layer produced as described above was applied onto one side of the prepared separator substrate at a speed of 10 m/min using a gravure coater and was then dried in a 50°C drying furnace to obtain a separator including a heat-resistant layer at one side (heat-resistant layer-equipped separator; heat-resistant layer thickness: 2.5 µm).

The heat-resistant layer-equipped separator obtained in this manner was used to evaluate heat shrinkage resistance and electrolyte solution affinity of the heat-resistant layer. The results are shown in Table 1.

### <Production of negative electrode>

A 5 MPa pressure-resistant vessel equipped with a stirrer was charged with 33 parts of 1,3-butadiene as a conjugated diene monomer, 3.5 parts of itaconic acid as a carboxy group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were subsequently heated to 50°C to initiate polymerization. At the point at which the polymerization conversion rate reached 96%, cooling was performed to quench the polymerization reaction to yield a mixture containing a particulate binder (styrene-butadiene copolymer). The mixture was adjusted to pH 8 through addition of 5% sodium hydroxide aqueous solution and was subsequently subjected to thermal-vacuum distillation to remove unreacted monomer. Thereafter, the mixture was cooled to 30°C or lower to obtain a water dispersion containing a binder for a negative electrode.

A planetary mixer was charged with 48.75 parts of artificial graphite (theoretical capacity: 360 mAh/g) and 48.75 parts of natural graphite (theoretical capacity: 360 mAh/g) as negative electrode active materials and 1 part (in terms of solid content) of carboxymethyl cellulose as a thickener. These materials were diluted to a solid content concentration of 60% with deionized water and were subsequently kneaded at a rotation speed of 45 rpm for 60 minutes. Thereafter, 1.5 parts in terms of solid content of the water dispersion containing the binder for a negative electrode obtained as described above was added and was kneaded therewith at a rotation speed of 40 rpm for 40 minutes. The viscosity was adjusted to 3,000 ± 500 mPa·s (measured by B-type viscometer at 25°C and 60 rpm) through addition of deionized water to produce a slurry composition for a negative electrode mixed material layer.

The slurry composition for a negative electrode mixed material layer was applied onto the surface of copper foil of 15 µm in thickness serving as a current collector by a comma coater such as to have a coating weight of 11 ± 0.5 mg/cm². The copper foil with the slurry composition for a negative electrode mixed material layer applied thereon was subsequently conveyed inside an oven having a temperature of 80°C for 2 minutes and an oven having a temperature of 110°C for 2 minutes at a speed of 400 mm/min so as to dry the slurry composition on the copper foil and obtain a negative electrode web having a negative electrode mixed material layer formed on the current collector.

The negative electrode mixed material layer-side of the produced negative electrode web was subsequently roll pressed with a line pressure of 11 t (tons) in an environment having a temperature of 25 ± 3°C to obtain a negative electrode having a negative electrode mixed material layer density of 1.60 g/cm³.

### <Production of positive electrode>

A slurry composition for a positive electrode mixed material layer was produced by adding 96 parts of an active material NMC532 (LiNi_{0.5}Mn_{0.3}Co_{0.2}O₂) based on a lithium complex oxide of Co-Ni-Mn as a positive electrode active material, 2 parts of acetylene black (produced by Denka Company Limited; product name HS-100) as a conductive material, and 2 parts of polyvinylidene fluoride (produced by Kureha Corporation; product name: KF-1100) as a binder into a planetary mixer, adjusting these materials to a total solid content concentration of 67% through addition of N-methyl-2-pyrrolidone (NMP) as a dispersion medium, and mixing these materials.

Next, the obtained slurry composition for a positive electrode mixed material layer was applied onto aluminum foil of 20 µm in thickness serving as a current collector by a comma coater such as to have a coating weight of 20 ± 0.5 mg/cm².

In addition, the aluminum foil was conveyed inside an oven having a temperature of 90°C for 2 minutes and an oven having a temperature of 120°C for 2 minutes at a speed of 200 mm/min so as to dry the slurry composition on the aluminum foil and obtain a positive electrode web having a positive electrode mixed material layer formed on the current collector.

The positive electrode mixed material layer-side of the produced positive electrode web was subsequently roll pressed with a line pressure of 14 t (tons) in an environment having a temperature of 25 ± 3°C to obtain a positive electrode having a positive electrode mixed material layer density of 3.20 g/cm³.

### <Production of lithium ion secondary battery>

The post-pressing positive electrode and negative electrode and the heat-resistant layer-equipped separator obtained as described above were each cut out. The surface at the heat-resistant layer-side of the cut-out heat-resistant layer-equipped separator was oriented toward and arranged on the positive electrode mixed material layer of the post-pressing positive electrode that had been cut out. In addition, the surface of the negative electrode mixed material layer of the post-pressing negative electrode that had been cut out was oriented toward and arranged on an uncoated surface of the arranged heat-resistant layer-equipped separator, which was a surface not in contact with the positive electrode, to thereby obtain a battery member laminate (positive electrode/heat-resistant layer/separator substrate/negative electrode).

Next, the obtained laminate was enclosed in an aluminum packing case serving as a battery case, and then electrolyte solution (solvent: ethylene carbonate (EC)/diethyl carbonate (DEC) = 30/70 (volume ratio); electrolyte: LiPF₆ of 1 mol/L in concentration; additive: 2 volume% of vinylene carbonate (solvent ratio)) was injected such that no air remained. An opening of the aluminum packing case was heat sealed at a temperature of 150°C to tightly close the aluminum packing case and thereby produce a 40 mAh stacked lithium ion secondary battery.

This lithium ion secondary battery was used to evaluate rate characteristics. The result is shown in Table 1.

### (Examples 2 to 7 and Comparative Examples 1 and 2)

An aqueous solution containing a water-soluble polymer, a slurry composition for a heat-resistant layer, a heat-resistant layer-equipped separator, a negative electrode, a positive electrode, and a secondary battery were prepared or produced in the same way as in Example 1 with the exception that in production of the aqueous solution containing a water-soluble polymer in Example 1, the types and/or amounts of used monomers were changed such that the proportional contents of monomer units in the obtained water-soluble polymer were as indicated in Tables 1 and 2. Evaluations were conducted in the same manner as in Example 1. The results are shown in Tables 1 and 2.

### (Example 8)

A slurry composition for a heat-resistant layer, a heat-resistant layer-equipped separator, a negative electrode, a positive electrode, and a secondary battery were prepared or produced in the same way as in Example 1 with the exception that an aqueous solution containing a water-soluble polymer that was produced as described below was used. Evaluations were conducted in the same manner as in Example 1. The results are shown in Table 1.

### <Production of aqueous solution containing water-soluble polymer>

A 10 L flask equipped with a septum was charged with 6,335 g of deionized water and 85 g of a 2.0% aqueous solution of L-ascorbic acid as a polymerization accelerator. These materials were heated to a temperature of 40°C, and the inside of the flask was purged with nitrogen gas at a flow rate of 100 mL/min. Next, 1,053 g (81.0%) of acrylamide as an amide group-containing monomer, 143 g (11.0%) of acrylic acid as an ethylenic acid group-containing monomer, and 104 g (8.0%) of acrylonitrile as a nitrile group-containing monomer were mixed and were injected into the flask using a syringe. Thereafter, 90 g of a 5.0% aqueous solution of ammonium persulfate as a polymerization initiator was added into the flask using a syringe, and the reaction temperature was set to 60°C. After 2 hours, 45 g of a 5.0% aqueous solution of ammonium persulfate as a polymerization initiator and 42.5 g of a 2.0% aqueous solution of L-ascorbic acid as a polymerization accelerator were added in order to further raise the reaction conversion rate. After a further 2 hours, 45 g of a 5.0% aqueous solution of ammonium persulfate as a polymerization initiator and 42.5 g of a 2.0% aqueous solution of L-ascorbic acid as a polymerization accelerator were added. After 2 hours, 34 g of a 5% aqueous solution of sodium nitrite as a reaction inhibitor was added and stirred. Thereafter, the flask was cooled to 40°C, was converted to an air atmosphere, and the pH of the system was adjusted to 8.0 using 8% lithium hydroxide aqueous solution to produce an aqueous solution containing a water-soluble polymer.

### (Example 9)

A slurry composition for a heat-resistant layer, a heat-resistant layer-equipped separator, a negative electrode, a positive electrode, and a secondary battery were prepared or produced in the same way as in Example 1 with the exception that an aqueous solution containing a water-soluble polymer that was produced as described below was used. Evaluations were conducted in the same manner as in Example 1. The results are shown in Table 1.

### <Production of aqueous solution containing water-soluble polymer>

A 10 L flask equipped with a septum was charged with 6,335 g of deionized water and 255 g of a 2.0% aqueous solution of L-ascorbic acid as a polymerization accelerator. These materials were heated to a temperature of 40°C, and the inside of the flask was purged with nitrogen gas at a flow rate of 100 mL/min. Next, 1,053 g (81.0%) of acrylamide as an amide group-containing monomer, 143 g (11.0%) of acrylic acid as an ethylenic acid group-containing monomer, and 104 g (8.0%) of acrylonitrile as a nitrile group-containing monomer were mixed and were injected into the flask using a syringe. Thereafter, 270 g of a 5.0% aqueous solution of ammonium persulfate as a polymerization initiator was added into the flask using a syringe, and the reaction temperature was set to 60°C. After 2 hours, 135 g of a 5.0% aqueous solution of ammonium persulfate as a polymerization initiator and 127.5 g of a 2.0% aqueous solution of L-ascorbic acid as a polymerization accelerator were added in order to further raise the reaction conversion rate. After a further 2 hours, 135 g of a 5.0% aqueous solution of ammonium persulfate as a polymerization initiator and 127.5 g of a 2.0% aqueous solution of L-ascorbic acid as a polymerization accelerator were added. After 2 hours, 34 g of a 5% aqueous solution of sodium nitrite as a reaction inhibitor was added and stirred. Thereafter, the flask was cooled to 40°C, was converted to an air atmosphere, and the pH of the system was adjusted to 8.0 using 8% lithium hydroxide aqueous solution to produce an aqueous solution containing a water-soluble polymer.

### (Examples 10 and 11)

An aqueous solution containing a water-soluble polymer, a slurry composition for a heat-resistant layer, a heat-resistant layer-equipped separator, a negative electrode, a positive electrode, and a secondary battery were prepared or produced in the same way as in Example 1 with the exception that in production of the slurry composition for a non-aqueous secondary battery heat-resistant layer, the used amount of the aqueous solution containing the water-soluble polymer was changed from 3 parts to 5 parts in terms of solid content (Example 10) or from 3 parts to 1 part in terms of solid content (Example 11). Evaluations were conducted in the same manner as in Example 1. The results are shown in Table 1.

### (Example 12)

An aqueous solution containing a water-soluble polymer, a slurry composition for a heat-resistant layer, a heat-resistant layer-equipped separator, a negative electrode, a positive electrode, and a secondary battery were prepared or produced in the same way as in Example 1 with the exception that in production of the slurry composition for a non-aqueous secondary battery heat-resistant layer, dioctyl sulfosuccinate was not used, the used amount of the aqueous solution containing the water-soluble polymer was changed from 3 parts to 1.5 parts in terms of solid content, and 3 parts in terms of solid content of a water dispersion containing a particulate polymer that was produced as described below was added. Evaluations were conducted in the same manner as in Example 1. The results are shown in Table 1.

### <Production of water dispersion containing particulate polymer>

A reactor including a stirrer was supplied with 70 parts of deionized water, 0.15 parts of sodium lauryl sulfate (produced by Kao Corporation; product name: EMAL^{®} 2F (EMAL is a registered trademark in Japan, other countries, or both)) as an emulsifier, and 0.5 parts of ammonium persulfate, the gas phase was purged with nitrogen gas, and the temperature was raised to 60°C.

Meanwhile, a monomer composition was obtained in a separate vessel by mixing 50 parts of deionized water, 0.5 parts of sodium dodecylbenzenesulfonate as a dispersant, 94.2 parts of n-butyl acrylate (BA) as a (meth)acrylic acid ester monomer, 2 parts of methacrylic acid (MAA) as a hydrophilic group-containing monomer, 0.3 parts of allyl methacrylate (AMA) and 1.5 parts of allyl glycidyl ether (AGE) as cross-linkable monomers, and 2 parts of acrylonitrile (AN) as another monomer. This monomer composition was continuously added into the reactor over 4 hours to perform polymerization. The reaction was carried out at 60°C during the addition. Once the addition was complete, a further 3 hours of stirring was performed at 70°C, and then the reaction was ended to produce a water dispersion containing a particulate polymer.

The obtained particulate polymer had a volume-average particle diameter 0.36 µm according to laser diffraction/scattering particle size distribution measurement and a glass-transition temperature of -39°C.

### (Example 13)

An aqueous solution containing a water-soluble polymer, a slurry composition for a heat-resistant layer, a heat-resistant layer-equipped separator, a negative electrode, a positive electrode, and a secondary battery were prepared or produced in the same way as in Example 1 with the exception that in production of the slurry composition for a non-aqueous secondary battery heat-resistant layer, the used amount of the polyoxyalkylene glycol-based surfactant was changed from 0.2 parts to 0.6 parts and the used amount of dioctyl sulfosuccinate was changed from 0.1 parts to 0.3 parts. Evaluations were conducted in the same manner as in Example 1. The results are shown in Table 1.

### (Example 14)

An aqueous solution containing a water-soluble polymer, a slurry composition for a heat-resistant layer, a heat-resistant layer-equipped separator, a negative electrode, a positive electrode, and a secondary battery were prepared or produced in the same way as in Example 1 with the exception that dioctyl sulfosuccinate was not used in production of the slurry composition for a non-aqueous secondary battery heat-resistant layer. Evaluations were conducted in the same manner as in Example 1. The results are shown in Table 2.

### (Example 15)

An aqueous solution containing a water-soluble polymer, a slurry composition for a heat-resistant layer, a heat-resistant layer-equipped separator, a negative electrode, a positive electrode, and a secondary battery were prepared or produced in the same way as in Example 1 with the exception that in production of the slurry composition for a non-aqueous secondary battery heat-resistant layer, the pH of the slurry composition for a heat-resistant layer was adjusted to 9.5 using 8% lithium hydroxide. Evaluations were conducted in the same manner as in Example 1. The results are shown in Table 2.

### (Example 16)

An aqueous solution containing a water-soluble polymer, a slurry composition for a heat-resistant layer, a heat-resistant layer-equipped separator, a negative electrode, a positive electrode, and a secondary battery were prepared or produced in the same way as in Example 1 with the exception that in production of the slurry composition for a non-aqueous secondary battery heat-resistant layer, the pH of the slurry composition for a heat-resistant layer was adjusted to 7.5 using 10% dilute sulfuric acid. Evaluations were conducted in the same manner as in Example 1. The results are shown in Table 2.

### (Example 17)

An aqueous solution containing a water-soluble polymer, a slurry composition for a heat-resistant layer, a heat-resistant layer-equipped separator, a negative electrode, a positive electrode, and a secondary battery were prepared or produced in the same way as in Example 1 with the exception that in production of the heat-resistant layer-equipped separator, a separator substrate made of polyethylene (produced by Asahi Kasei Corporation; product name: ND412; thickness: 12 µm; water contact angle: 100°) that was subjected to surface treatment by corona treatment such as to adjust the water contact angle to 60° was used as a separator substrate. Evaluations were conducted in the same manner as in Example 1. The results are shown in Table 2.

### (Example 18)

An aqueous solution containing a water-soluble polymer, a slurry composition for a heat-resistant layer, a heat-resistant layer-equipped separator, a negative electrode, a positive electrode, and a secondary battery were prepared or produced in the same way as in Example 1 with the exception that in production of the slurry composition for a non-aqueous secondary battery heat-resistant layer, alumina particles (produced by Nippon Light Metal Co., Ltd.; product name: LS-256; volume-average particle diameter: 0.5 µm) were used instead of barium sulfate particles as non-conductive particles, and the solid content concentration of the slurry composition for a heat-resistant layer was changed from 50% to 40%. Evaluations were conducted in the same manner as in Example 1. The results are shown in Table 2.

### (Example 19)

An aqueous solution containing a water-soluble polymer, a slurry composition for a heat-resistant layer, a heat-resistant layer-equipped separator, a negative electrode, a positive electrode, and a secondary battery were prepared or produced in the same way as in Example 1 with the exception that in production of the slurry composition for a non-aqueous secondary battery heat-resistant layer, boehmite particles (produced by Kawai Lime Industry Co., Ltd.; product name: BMM; volume-average particle diameter: 0.9 µm) were used instead of barium sulfate particles as non-conductive particles, and the solid content concentration of the slurry composition for a heat-resistant layer was changed from 50% to 40%. Evaluations were conducted in the same manner as in Example 1. The results are shown in Table 2.

### (Example 20)

An aqueous solution containing a water-soluble polymer, a slurry composition for a heat-resistant layer, a heat-resistant layer-equipped separator, a negative electrode, a positive electrode, and a secondary battery were prepared or produced in the same way as in Example 1 with the exception that in production of the heat-resistant layer-equipped separator, a separator substrate made of a single layer of polyethylene (250 mm (width) × 1,000 mm (length) × 12 µm (thickness); air permeability: 155 s/100 cc; water contact angle: 110°) that was produced by a wet method was used as a separator substrate. Evaluations were conducted in the same manner as in Example 1. The results are shown in Table 2.

### (Comparative Example 3)

An aqueous solution containing a water-soluble polymer, a slurry composition for a heat-resistant layer, a heat-resistant layer-equipped separator, a negative electrode, a positive electrode, and a secondary battery were prepared or produced in the same way as in Example 1 with the exception that in production of the slurry composition for a non-aqueous secondary battery heat-resistant layer, the pH of the slurry composition for a heat-resistant layer was adjusted to 11 using 8% lithium hydroxide. Evaluations were conducted in the same manner as in Example 1. The results are shown in Table 2.

### (Comparative Example 4)

An aqueous solution containing a water-soluble polymer, a slurry composition for a heat-resistant layer, a heat-resistant layer-equipped separator, a negative electrode, a positive electrode, and a secondary battery were prepared or produced in the same way as in Example 1 with the exception that in production of the slurry composition for a non-aqueous secondary battery heat-resistant layer, the pH of the slurry composition for a heat-resistant layer was adjusted to 6 using 10% dilute sulfuric acid. Evaluations were conducted in the same manner as in Example 1. The results are shown in Table 2.

### (Comparative Example 5)

A slurry composition for a heat-resistant layer, a heat-resistant layer-equipped separator, a negative electrode, a positive electrode, and a secondary battery were prepared or produced in the same way as in Example 1 with the exception that an aqueous solution containing a water-soluble polymer that was produced as described below was used. Evaluations were conducted in the same manner as in Example 1. The results are shown in Table 2.

### <Production of aqueous solution containing water-soluble polymer>

A 10 L flask equipped with a septum was charged with 6,335 g of deionized water and 42.5 g of a 2.0% aqueous solution of L-ascorbic acid as a polymerization accelerator. These materials were heated to a temperature of 40°C, and the inside of the flask was purged with nitrogen gas at a flow rate of 100 mL/min. Next, 975 g (75.0%) of acrylamide as an amide group-containing monomer and 325 g (25.0%) of acrylic acid as an acid group-containing monomer were mixed and were injected into the flask using a syringe. Thereafter, 45 g of a 5.0% aqueous solution of ammonium persulfate as a polymerization initiator was added into the flask using a syringe, and the reaction temperature was set to 60°C. After 2 hours, 22.5 g of a 5.0% aqueous solution of ammonium persulfate as a polymerization initiator and 21.3 g of a 2.0% aqueous solution of L-ascorbic acid as a polymerization accelerator were added in order to further raise the reaction conversion rate. After a further 2 hours, 22.5 g of a 5.0% aqueous solution of ammonium persulfate as a polymerization initiator and 21.3 g of a 2.0% aqueous solution of L-ascorbic acid as a polymerization accelerator were added. After 2 hours, 34 g of a 5% aqueous solution of sodium nitrite as a reaction inhibitor was added and stirred. Thereafter, the flask was cooled to 40°C, was converted to an air atmosphere, and the pH of the system was adjusted to 8.0 using 8% lithium hydroxide aqueous solution to produce an aqueous solution containing a water-soluble polymer.

### (Comparative Example 6)

An aqueous solution containing a water-soluble polymer, a slurry composition for a heat-resistant layer, a heat-resistant layer-equipped separator, a negative electrode, a positive electrode, and a secondary battery were prepared or produced in the same way as in Example 1 with the exception that a polyoxyalkylene glycol-based surfactant and dioctyl sulfosuccinate were not used in production of the slurry composition for a non-aqueous secondary battery heat-resistant layer. Evaluations were conducted in the same manner as in Example 1. The results are shown in Table 2.

In Tables 1 and 2, shown below:
"AAm" indicates acrylamide unit;
"AA" indicates acrylic acid unit;
"AN" indicates acrylonitrile unit;
"BaSO₄" indicates barium sulfate particles;
"Al₂O₃" indicates alumina particles;
"AlOOH" indicates boehmite particles;
"EO/PO" indicates polyoxyalkylene glycol-based surfactant;
"DS" indicates dioctyl sulfosuccinate;
"PE-A" indicates separator substrate made of polyethylene (produced by Asahi Kasei Corporation; product name: ND412; thickness: 12 µm); and
"PE-B" indicates separator substrate made of single layer of polyethylene (250 mm (width) × 1,000 mm (length) × 12 µm (thickness); air permeability: 155 s/100 cc; water contact angle: 110°).

**[Table 1]**

| | | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|---|
| | Water-soluble polymer | Amide group-containing monomer unit [mass%] | AAm | 81 | 95 | 66 | 69 | 89 | 76 | 89 | 81 | 81 | 81 | 81 | 81 | 81 |
| | | Acid group-containing monomer unit [mass%] | AA | 11 | 3 | 20 | 23 | 3 | 11 | 11 | 11 | 11 | 11 | 11 | 11 | 11 |
| | | Nitrile group-containing monomer unit [mass%] | AN | 8 | 2 | 14 | 8 | 8 | 13 | - | 8 | 8 | 8 | 8 | 8 | 8 |
| | | Weight-average molecular weight [-] | | 400,000 | 500,000 | 600,000 | 600,000 | 500,000 | 500,000 | 400,000 | 900,000 | 100,000 | 400,000 | 400,000 | 400,000 | 400,000 |
| | | Amount [parts by mass] | | 3 | 3 | 3 | 3 | 3 | 3 | 3 | 3 | 3 | 5 | 1 | 1.5 | 3 |
| | Non-conductive particles | Type | | BaSO₄ | BaSO₄ | BaSO₄ | BaSO₄ | BaSO₄ | BaSO₄ | BaSO₄ | BaSO₄ | BaSO₄ | BaSO₄ | BaSO₄ | BaSO₄ | BaSO₄ |
| Slurry composition | | Amount [parts by mass] | | 100 | 100 | 100 | 100 | 100 | 100 | 100 | 100 | 100 | 100 | 100 | 100 | 100 |
| for heat-resistant | Dispersant | Amount [parts by mass] | | 0.5 | 0.5 | 0.5 | 0.5 | 0.5 | 0.5 | 0.5 | 0.5 | 0.5 | 0.5 | 0.5 | 0.5 | 0.5 |
| layer | Particulate potymer | Amount [parts by mass] | | 0 | 0 | 0 | 0 | 0 | 0 | 0 | 0 | 0 | 0 | 0 | 3 | 0 |
| | Wetting agent | Amount [parts by mass] | EO/PO | 0.2 | 0.2 | 0.2 | 0.2 | 0.2 | 0.2 | 0.2 | 0.2 | 0.2 | 0.2 | 0.2 | 0.2 | 0.6 |
| | | | DS | 0.1 | 0.1 | 0.1 | 0.1 | 0.1 | 0.1 | 0.1 | 0.1 | 0.1 | 0.1 | 0.1 | 0 | 0.3 |
| | Particulate polymer/ (Water-soluble polymer + Particulate polymer) [mass%] | | | 0 | 0 | 0 | 0 | 0 | 0 | 0 | 0 | 0 | 0 | 0 | 66.7 | 0 |
| | Slurry solid contert concentration [mass%] | | | 50 | 50 | 50 | 50 | 50 | 50 | 50 | 50 | 50 | 50 | 50 | 50 | 50 |
| | Viscosity [mPa·s] | | | 156 | 120 | 191 | 196 | 123 | 178 | 135 | 218 | 147 | 285 | 75 | 86 | 152 |
| | pH | | | 8.5 | 8.5 | 8.5 | 8.5 | 8.5 | 8.5 | 8.5 | 8.5 | 8.5 | 8.5 | 8.5 | 8.5 | 8.5 |
| | Contact angle with pofyethylene substrate | | | 33° | 35° | 31° | 30° | 35° | 32° | 32° | 35° | 31° | 39° | 30° | 27° | 25° |
| Separator substrate | Type | | | PE-A | PE-A | PE-A | PE-A | PE-A | PE-A | PE-A | PE-A | PE-A | PE-A | PE-A | PE-A | PE-A |
| | Surface treatment | | | No | No | No | No | No | No | No | No | No | No | No | No | No |
| Evaluation | Dispersion stability | | | A | A | A | B | A | A | A | A | A | A | A | A | A |
| | Slurry coatability | | | A | B | A | A | B | A | A | B | A | B | A | A | A |
| | Heat shrinkage resistance | | | A | A | B | B | A | B | A | A | B | A | B | A | B |
| | Electrolyte solution affinity | | | A | A | A | A | A | A | A | A | A | B | A | B | A |
| | Rate characteristics | | | A | A | B | B | A | A | A | A | A | B | A | B | B |

**[Table 2]**

| | | | | Example 14 | Example 15 | Example 16 | Example 17 | Example 18 | Example 19 | Example 20 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|
| | Water-sokible polymer | Amide group-cortaining monomer unit [mass%] | AAm | 81 | 81 | 81 | 81 | 81 | 81 | 81 | 100 | 55 | 81 | 81 | 75 | 81 |
| | | Acid group-containing monomer unit [mass%] | AA | 11 | 11 | 11 | 11 | 11 | 11 | 11 | - | 30 | 11 | 11 | 25 | 11 |
| | | Nitrile group-cortaining monomer unit [mass%] | AN | 8 | 8 | 8 | 8 | 8 | 8 | 8 | - | 15 | 8 | 8 | - | 8 |
| | | Weight-average molecular weight | | 400,000 | 400,000 | 400,000 | 400,000 | 400,000 | 400,000 | 400,000 | 500,000 | 500,000 | 400,000 | 400,000 | 1,300,000 | 400,000 |
| | | Amount [parts by mass] | | 3 | 3 | 3 | 3 | 3 | 3 | 3 | 3 | 3 | 3 | 3 | 3 | 3 |
| Slurry composition | Non-conductive particles | Type | | BaSO₄ | BaSO₄ | BaSO₄ | BaSO₄ | Al₂O₃ | AlOOH | BaSO₄ | BaSO₄ | BaSO₄ | BaSO₄ | BaSO₄ | BaSO₄ | BaSO₄ |
| | | Amount [parts by mass] | | 100 | 100 | 100 | 100 | 100 | 100 | 100 | 100 | 100 | 100 | 100 | 100 | 100 |
| for heatresistant | Dispersant | Amount [parts by mass] | | 0.5 | 0.5 | 0.5 | 0.5 | 0.5 | 0.5 | 0.5 | 0.5 | 0.5 | 0.5 | 0.5 | 0.5 | 0.5 |
| layer | Particulate polymer | Amount [parts by mass] | | 0 | 0 | 0 | 0 | 0 | 0 | 0 | 0 | 0 | 0 | 0 | 0 | 0 |
| | Wetting agent | Amount [parts by mass] | EO/PO | 0.2 | 0.2 | 0.2 | 0.2 | 0.2 | 0.2 | 0.2 | 0.2 | 0.2 | 0.2 | 0.2 | 0.2 | 0 |
| | | | DS | 0 | 0.1 | 0.1 | 0 | 0.1 | 0.1 | 0.1 | 0.1 | 0.1 | 0.1 | 0.1 | 0.1 | 0 |
| | Particulate polymer/ (Water-soluble polymer + Particulate potymer) [mass%] | | | 0 | 0 | 0 | 0 | 0 | 0 | 0 | 0 | 0 | 0 | 0 | 0 | 0 |
| | Slurry solid coitent concertration [mass%] | | | 50 | 50 | 50 | 50 | 40 | 40 | 50 | 50 | 50 | 50 | 50 | 50 | 50 |
| | Viscosity [mPa·s] | | | 160 | 162 | 158 | 156 | 73 | 81 | 156 | 163 | 170 | 170 | 170 | 550 | 158 |
| | pH | | | 8.5 | 9.5 | 7.5 | 8.5 | 8.5 | 8.5 | 8.5 | 8.5 | 8.5 | 11 | 6 | 8.5 | 8.5 |
| | Cortact angle with polyethylene substrate | | | 47° | 33° | 33° | 27° | 36° | 35° | 33° | 34° | 30° | 30° | 30° | 40° | 53° |
| Separator substrate | Type | | | PE-A | PE-A | PE-A | PE-A | PE-A | PE-A | PE-B | PE-A | PE-A | PE-A | PE-A | PE-A | PE-A |
| | Surface treatment | | | No | No | No | Yes | No | No | No | No | No | No | No | No | No |
| Evaluation | Dispersion stability | | | A | B | B | A | A | A | A | C | C | c | c | B | A |
| | Slurry coatability | | | B | A | A | A | A | A | A | C | B | B | B | C | C |
| | Heat shrinkage resistance | | | A | A | A | A | A | A | A | B | C | B | B | B | C |
| | Electrolyte solution affinity | | | A | A | A | A | A | A | A | A | A | A | A | A | B |
| | Rate characteristics | | | A | A | A | A | A | A | A | A | C | A | A | C | B |

It can be seen from Tables 1 and 2 that a slurry composition for a heat-resistant layer having excellent dispersion stability and coatability and a heat-resistant layer having excellent heat shrinkage resistance can be formed in Examples 1 to 20 in which the used slurry composition for a heat-resistant layer contains non-conductive particles and a water-soluble polymer having proportional contents of amide group-containing monomer units and acid group-containing monomer units that are within specific ranges and has a pH, viscosity, and contact angle with a polyethylene substrate that are within specific ranges. It can also be seen that heat-resistant layers formed using the slurry compositions for a heat-resistant layer of Examples 1 to 20 have excellent electrolyte solution affinity and can cause a secondary battery to display excellent rate characteristics.

In contrast, it can be seen that dispersion stability and coatability of a slurry composition for a heat-resistant layer decrease in Comparative Example 1 in which the used slurry composition for a heat-resistant layer contains a water-soluble polymer that is composed of only amide group-containing monomer units.

It can also be seen that dispersion stability of a slurry composition for a heat-resistant layer and heat shrinkage resistance of a heat-resistant layer decrease, and rate characteristics of a secondary battery deteriorate in Comparative Example 2 in which the used slurry composition for a heat-resistant layer contains a water-soluble polymer having proportional contents of amide group-containing monomer units and acid group-containing monomer units that are outside of the specific ranges.

It can also be seen that dispersion stability of a slurry composition for a heat-resistant layer decreases in Comparative Examples 3 and 4 in which the used slurry composition for a heat-resistant layer has a pH that is outside of the specific range.

It can also be seen that coatability of a slurry composition for a heat-resistant layer decreases and rate characteristics of a secondary battery deteriorate in Comparative Example 5 in which the used slurry composition for a heat-resistant layer has a viscosity that is outside of the specific range.

It can also be seen that coatability of a slurry composition for a heat-resistant layer and heat shrinkage resistance of a heat-resistant layer decrease in Comparative Example 6 in which the used slurry composition for a heat-resistant layer has a contact angle with a polyethylene substrate that is outside of the specific range.

### INDUSTRIAL APPLICABILITY

According to the present disclosure, it is possible to provide a slurry composition for a non-aqueous secondary battery heat-resistant layer that has excellent dispersion stability and coatability and that can form a heat-resistant layer for a non-aqueous secondary battery having excellent heat shrinkage resistance.

Moreover, according to the present disclosure, it is possible to provide a heat-resistant layer for a non-aqueous secondary battery that has excellent heat shrinkage resistance, a heat-resistant layer-equipped separator for a non-aqueous secondary battery that includes this heat-resistant layer, and a non-aqueous secondary battery that includes this heat-resistant layer-equipped separator.

## Claims

1. A slurry composition for a non-aqueous secondary battery heat-resistant layer comprising a water-soluble polymer, non-conductive particles, and water, wherein
the water-soluble polymer includes an amide group-containing monomer unit and an acid group-containing monomer unit,
proportional content of the amide group-containing monomer unit is not less than 60 mass% and not more than 98 mass% and proportional content of the acid group-containing monomer unit is not less than 1 mass% and not more than 25 mass% in the water-soluble polymer,
the slurry composition for a non-aqueous secondary battery heat-resistant layer has a pH of not lower than 7.0 and not higher than 10.0,
the slurry composition for a non-aqueous secondary battery heat-resistant layer has a viscosity of not less than 10 mPa·s and not more than 300 mPa·s, and
the slurry composition for a non-aqueous secondary battery heat-resistant layer has a contact angle with a polyethylene substrate of not less than 20° and not more than 50°.

2. The slurry composition for a non-aqueous secondary battery heat-resistant layer according to claim 1, further comprising not less than 0.1 parts by mass and not more than 1.0 parts by mass of a wetting agent per 100 parts by mass of the non-conductive particles.

3. The slurry composition for a non-aqueous secondary battery heat-resistant layer according to claim 1 or 2, wherein the water-soluble polymer further includes a nitrile group-containing monomer unit.

4. The slurry composition for a non-aqueous secondary battery heat-resistant layer according to claim 3, wherein proportional content of the nitrile group-containing monomer unit is not less than 1 mass% and not more than 15 mass% in the water-soluble polymer.

5. The slurry composition for a non-aqueous secondary battery heat-resistant layer according to any one of claims 1 to 4, wherein the watersoluble polymer has a weight-average molecular weight of not less than 50,000 and not more than 1,000,000.

6. The slurry composition for a non-aqueous secondary battery heat-resistant layer according to any one of claims 1 to 5, wherein content of a particulate polymer is 80 mass% or less of total content of the water-soluble polymer and the particulate polymer.

7. A heat-resistant layer for a non-aqueous secondary battery formed using the slurry composition for a non-aqueous secondary battery heat-resistant layer according to any one of claims 1 to 6.

8. A heat-resistant layer-equipped separator for a non-aqueous secondary battery comprising the heat-resistant layer for a non-aqueous secondary battery according to claim 7.

9. A non-aqueous secondary battery comprising the heat-resistant layer-equipped separator for a non-aqueous secondary battery according to claim 8.
